# EUROPEAN PATENT SPECIFICATION

(11) **EP 2 936 386 B1**
(45) Date of publication and mention of the grant of the patent: **15.03.2023**
(21) Application number: 13820763.4
(22) Date of filing: 19.12.2013
(51) Int. Cl.: G06V 20/58, G06V 40/10

(54) **METHOD FOR DETECTING A TARGET OBJECT BASED ON A CAMERA IMAGE BY CLUSTERING FROM MULTIPLE ADJACENT IMAGE CELLS, CAMERA DEVICE AND MOTOR VEHICLE**
VERFAHREN ZUR ERKENNUNG EINES ZIELOBJEKTS AUF BASIS EINES KAMERABILDES DURCH CLUSTERN AUS BILDERN VON MEHREREN BENACHBARTEN ZELLEN, KAMERAVORRICHTUNG UND KRAFTFAHRZEUG
PROCÉDÉ DE DÉTECTION D'OBJET CIBLE BASÉ SUR IMAGE DE APPAREIL PHOTO PAR REGROUPEMENT DE MULTIPLES CELLULES D'IMAGE ADJACENTES, DISPOSITIF APPAREIL PHOTO ET VÉHICULE MOTORISÉ

(30) Priority: 19.12.2012 DE 102012024878
(43) Date of publication of application: 28.10.2015
(73) Proprietor: Connaught Electronics Ltd., Tuam, County Galway (IE)
(72) Inventor: FINN, Sean, Galway City, County Galway (IE); HUGHES, Ciaran, Kinvara, County Galway (IE); TADJINE, Hadj Hamma, 12307 Berlin (DE); SCHEUNERT, Ullrich, 09127 Chemnitz (DE); WESTHUES, Andreas, 09113 Chemnitz (DE)
(74) Representative: Jauregui Urbahn, Kristian
(86) International application number: PCT/EP2013/077467
(87) International publication number: WO 2014/096240

(56) References cited:
- YI-HSIN LIU ET AL: "Pedestrian detection in images by integrating heterogeneous detectors", COMPUTER SYMPOSIUM (ICS), 2010 INTERNATIONAL, IEEE, PISCATAWAY, NJ, USA, 16 December 2010 (2010-12-16), pages 252-257, XP031847772, ISBN: 978-1-4244-7639-8
- BIPUL KUMAR SEN ET AL: "Pedestrian detection by on-board camera using collaboration of inter-layer algorithm", INTELLIGENT TRANSPORTATION SYSTEMS, 2009. ITSC '09. 12TH INTERNATIONAL IEEE CONFERENCE ON, IEEE, PISCATAWAY, NJ, USA, 4 October 2009 (2009-10-04), pages 1-8, XP031560103, ISBN: 978-1-4244-5519-5
- XIAOYU WANG ET AL: "An HOG-LBP human detector with partial occlusion handling", COMPUTER VISION, 2009 IEEE 12TH INTERNATIONAL CONFERENCE ON, IEEE, PISCATAWAY, NJ, USA, 29 September 2009 (2009-09-29), pages 32-39, XP031672558, ISBN: 978-1-4244-4420-5
- GUOLONG GAN ET AL: "Pedestrian Detection Based on HOG-LBP Feature", COMPUTATIONAL INTELLIGENCE AND SECURITY (CIS), 2011 SEVENTH INTERNATIONAL CONFERENCE ON, IEEE, 3 December 2011 (2011-12-03), pages 1184-1187, XP032094576, DOI: 10.1109/CIS.2011.262 ISBN: 978-1-4577-2008-6
- BASTIAN LEIBE ET AL: "Robust Object Detection with Interleaved Categorization and Segmentation", INTERNATIONAL JOURNAL OF COMPUTER VISION, KLUWER ACADEMIC PUBLISHERS, NORWELL, US, vol. 77, no. 1, 1 May 2008 (2008-05-01), pages 259-289, XP008154066, ISSN: 0920-5691, DOI: 10.1007/S11263-007-0095-3
- RODRIGO BENENSON ET AL: "Pedestrian detection at 100 frames per second", COMPUTER VISION AND PATTERN RECOGNITION (CVPR), 2012 IEEE CONFERENCE ON, IEEE, 16 June 2012 (2012-06-16), pages 2903-2910, XP032208942, DOI: 10.1109/CVPR.2012.6248017 ISBN: 978-1-4673-1226-4
- RODRIGO BENENSON ET AL: "Stixels estimation without depth map computation", COMPUTER VISION WORKSHOPS (ICCV WORKSHOPS), 2011 IEEE INTERNATIONAL CONFERENCE ON, IEEE, 6 November 2011 (2011-11-06), pages 2010-2017, XP032095492, DOI: 10.1109/ICCVW.2011.6130495 ISBN: 978-1-4673-0062-9
- BO WU ET AL: "Detection and Segmentation of Multiple, Partially Occluded Objects by Grouping, Merging, Assigning Part Detection Responses", INTERNATIONAL JOURNAL OF COMPUTER VISION, KLUWER ACADEMIC PUBLISHERS, BO, vol. 82, no. 2, 5 December 2008 (2008-12-05), pages 185-204, XP019690446, ISSN: 1573-1405
- BERKIN BILGIC ET AL: "Fast human detection with cascaded ensembles on the GPU", INTELLIGENT VEHICLES SYMPOSIUM (IV), 2010 IEEE, IEEE, PISCATAWAY, NJ, USA, 21 June 2010 (2010-06-21), pages 325-332, XP031732306, ISBN: 978-1-4244-7866-8

## Description

The invention relates to a method for detecting a target object in an environmental region of a camera, in particular of a motor vehicle, based on an image of the environmental region provided by means of the camera. In addition, the invention relates to a camera device, in particular for a motor vehicle, as well as to a motor vehicle with a camera device.

Presently, the interest is preferably directed to a vehicle camera. Camera systems for motor vehicles are already known from the prior art in manifold configuration. As is known, such a camera system includes a camera disposed on the motor vehicle and capturing an environmental region of the motor vehicle. Multiple such cameras can also be employed, which capture the entire environment around the motor vehicle. The camera mounted on the motor vehicle then captures a sequence of images of the environmental region and thus provides a plurality of images per second. This sequence of images is then communicated to an electronic evaluation device processing the images and being able to provide very different functionalities in the motor vehicle based on the images. Presently, the interest is directed to the detection of target objects located in the imaged environmental region. If such a target object is detected in the images, it can also be tracked in the sequence of images. If the images of the camera are displayed on a display, thus, the detected target object can also be provided with a border - the so-called "bounding box" - in order to thus allow the driver to be able to perceive and recognize the target object in the presented images without much effort. Therefore, the detection of a target object in the images usually includes that the mentioned "bounding box" is determined in the images, which is to characterize the target object itself.

For detecting a target object, the so-called characteristic features are extracted from the images. These features can for example include corners and/or edges. E.g. the Harris points can be detected as the characteristic features, wherein other algorithms can alternatively also be applied, such as SIFT, SURF, ORB and the like.

If the characteristic features are extracted from a camera image, thus, the further detection of target objects is effected based on the characteristic features. The characteristic features are divided in two groups in the further step: those features associated with the ground are classified as ground features; those features associated with real target objects and thus with items with a certain height above the ground are classified as target features. The target features can then be used for detecting target objects. In order to perform such a classification, for example the optical flow method can be used by determining the so-called optical flow vector to each characteristic feature based on two images. Based on the flow vectors, then, it can be decided whether the respective characteristic features are target features or else ground features. Herein, the calculated flow vectors can optionally also be correlated with the current movement vector of the motor vehicle.

If the mentioned classification has been performed and therefore the ground features on the one hand and the target features on the other hand are present, thus, there is a further challenge in grouping the features such that the features associated with one and the same target object are combined. This grouping of the features (clustering) is problematic because real target objects too usually have a portion located on or directly above the ground. Often, the characteristic features of this portion (for instance foot portion) are erroneously classified as ground features and not as target features, which makes the grouping of the features and thus the detection of target objects in the further step more difficult and more imprecise. If e.g. exclusively adjacent target features are combined with each other and associated with a certain target object, thus, this association can be incomplete because ground features possibly are also present, which actually are associated with this target object.

In "Pedestrian detection by on-board camera using collaboration of inter-layer algorithm" from Bipul Kumar Sen et al., Proceedings of the 12th Int. IEEE Conference on Intelligent Transportation Systems, 2009, p. 588-595 is described a pedestrian detection algorithm in low-resolution on-board monocular camera image sequences of cluttered scenes. A motion based objet detection algorithm is developed to detect foreground objects by analyzing horizontal motion vector.

It is an object of the invention to demonstrate a solution how in a method of the initially mentioned kind the target object can be particularly precisely detected - in particular by determining a "bounding box" in the image - based on the characteristic features of the image.

According to the invention, this object is solved by a method and by a camera device having the features according to the respective independent claims.

Advantageous implementations of the invention are the subject matter of the dependent claims, of the description and of the figures.

A method according to the invention serves for detecting a target object in an environmental region of a camera, in particular of a motor vehicle. The target object is detected based on an image of the environmental region, wherein the image is provided by means of the camera. A plurality of characteristic features is determined in the image, and it is differentiated between ground features and target features. Those features detected as associated with a ground of the environmental region are classified as ground features. In contrast, those features detected as associated with a target object are classified as target features, wherein an item is understood by the target object, which has a certain height above the ground and thus is differentiated from flat objects lying on the ground or else from signs applied to the ground. At least a partial region of the image is divided in a plurality of image cells, in particular a plurality of image cells of the same size. Then, it is examined to each image cell whether the image cell includes a ground feature or a target feature. Those image cells including at least one target feature are classified as target cells. Those image cells including at least one ground feature are classified as ground cells. Then, the target object is detected in that a plurality of adjacent image cells is combined to a target cluster, namely considering both the target cells and the ground cells.

For detecting the target object, thus, clustering is performed by combining a plurality of adjacent image cells to one and the same target cluster, which is associated with the target object. Therein, this clustering is effected both depending on the target cells and depending on the ground cells, in particular depending on a distribution of the target cells and the ground cells in the partial region of the image. Such an approach has the advantage that the target object can be particularly precisely detected and herein for example a border (the so-called bounding box) can be particularly accurately determined, which can for example also be displayed on a display device together with the image. In addition, the division of the partial region in a plurality of image cells provides for reduced computational effort and thus reduced detection time such that the determination of the target cluster can be performed in real time based on the respectively current image of the camera.

The classification of the characteristic features and thus the differentiation between target features on the one hand and ground features on the other hand are effected such that the associated optical flow vector is determined to each characteristic feature based on two images. Depending on the flow vector, it is then decided whether the associated feature is a ground feature or a target feature. Therein, the optical flow vector is also correlated with the current movement vector of the motor vehicle such that correction is effected based on the current movement of the motor vehicle. For example, a subtraction vector can respectively be calculated to each flow vector by subtracting the movement vector of the motor vehicle from the respective flow vector, and the classification can then be performed depending on the subtraction vectors. This is based on the realization that those characteristic features associated with the target objects have flow vectors considerably differing from the associated subtraction vectors in the direction and/or in the absolute value due to the so-called parallax. In contrast, the flow vectors of the ground are substantially equal to the associated subtraction values. Thus, it can be determined, which characteristic features are associated with the ground or with objects without height located on the ground as well as which characteristic features are associated with target objects standing on the ground and thus presenting potential obstacles. As already explained, however, this classification also has the property that the portion of a target object located on the ground (for example the foot of a pedestrian) causes characteristic features classified as ground features. However, this difficulty is countered in that both the target cells and the ground cells are taken into account in combining the adjacent image cells to the mentioned target cluster.

Basically, the size of the image cells can be arbitrarily defined, namely according to the required resolution on the one hand and the computing time on the other hand. Therein, image cells are for example defined, which are square cells, the width of which corresponds to the length. The size of an individual image cell can for example be between 2 x 2 pixels and 15 x 15 pixels, but it can in principle also be equal to 1x1 pixels. The size can for example be 8 x 8 pixels.

For extracting the characteristic features from the image, very different methods can be used. For example, the so-called Harris corners can be detected. Alternatively, it is also possible to apply other methods such as for example SIFT, SURF, ORB and the like. The target cluster includes the following steps: in the partial region of the image, a scan window is defined, and for a plurality of different positions of the scan window within the partial region, the number of the target cells as well as the number of the ground cells within the scan window is respectively determined. All of the image cells within the scan window in the respective position of the scan window can then be combined to a region of interest (referred to as ROI below), if a predetermined criterion with respect to the number of the target cells and the number of the ground cells within the scan window is satisfied. The target cluster can then be determined based on the ROls. Therein, the scan window can for example have the shape of a rectangle. It can have a size of several image cells. Such scanning of the partial region of the image by means of the scan window allows finding ROIs in the partial region of the image, which have a certain density of the target cells relative to the ground cells. Thus, those image cells can also be associated with a ROI, which are classified as ground cells such that in detection of the target object, its portion can also be taken into account, which is located immediately above the ground and the characteristic features of which are classified as ground features. Overall, thus, a very precise determination of the target cluster and thus highly accurate detection of the target object can be ensured.

The decision whether or not those image cells, which in a certain position of the scan window are located within this window, are to be combined to a ROI, can for example be made as follows: the number of the ground cells can be multiplied by a negative first weighting factor, while the number of the target cells located within the scan window can be multiplied by a positive second weighting factor. The predetermined criterion can include that the sum of the multiplication results is greater than a preset limit value. This means that all of the image cells located within the scan window constitute a ROI if the sum of the multiplication results is greater than the limit value. Thus, both the target cells and the ground cells contribute to this decision.

It proves advantageous if the position of the scan window is altered in the partial region of the image column by column. This means that the partial region is "scanned" by means of the scan window column by column. Preferably, the columns mutually overlap. After passing each one column, the scan window can for example be shifted only by a single image cell to the left or to the right in order to allow scanning of the next column. Overall, this increases the number of the possible ROIs and thus also the resolution in the determination of the target cluster. The step size of the scan window can therefore be for example 1 image cell.

The alteration of the position of the scan window is preferably effected column by column from the bottom to the top and thus starting from a lower border towards an upper border of the partial region. By such an approach, the computing time in determining the target cluster can be reduced. Namely, it is possible, after detecting a ROI within a certain column, to interrupt the scanning of this column and to switch to the next column.

Thus, in an embodiment it can be provided that if in a position of the scan window within a column, the predetermined criterion is satisfied and therefore a ROI is found, a further alteration of the position of the scan window within the same column is omitted and the scan window is defined in a further column. This reduces the computing time in the detection of the target object. Therein, this embodiment exploits the fact that mainly those target objects are relevant to the safety of the motor vehicle, which are closest to the motor vehicle. After detecting a ROI in the near range (in the lower region of the image), thus, the detection of a further ROI in the far range can be omitted.

The ROls can then be combined to target clusters. Namely, at least two adjacent ROIs are preferably combined to a common target cluster if an overlap region between these ROIs is greater than a preset limit value. Therein, the size of the overlap region can be specified as the number of the image cells associated with both the one ROI and the other ROI. If the overlap region is relatively large, it can be assumed that the two ROIs are associated with one and the same target object such that they can also be combined to a common target cluster. Thus, errors in the detection of the target objects are prevented.

As already explained, the classification of the characteristic features located relatively close to the ground, is relatively problematic. Those features actually associated with a target object can also be classified as ground features. They are usually features of a portion of the target object located very close to the ground, such as for example the feet of a pedestrian. Thus, the determination of the lower base of the target object - the so-called base point - is associated with a certain error. In order to minimize this error, the following steps can be performed:
To each ROI of a certain target cluster, a central point of a lower base edge of the ROI can respectively be determined. Then, a search area can be defined around this central point, for instance in the form of a preset rectangle. A characteristic feature can be located within the respective search area, which has the greatest intensity with respect to the other features within the search area. For example, if Harris features are detected, thus, each feature has a certain intensity. Between the feature with greatest intensity on the one hand and the associated central point on the other hand, then, a deviation vector can be determined. Depending on the deviation vectors, then, the position of the target cluster in the image can be corrected. This embodiment is based on the realization that the most intense features are usually located at the transition between the ground and the target object.

The correction of the position of the target cluster can include that a median of all of the deviation vectors of the target cluster is determined and the target cluster is shifted by the median vector. In this manner, the error in the determination of the position of the target object in the image is minimized.

As already explained, a bounding box can be provided to the target object, namely in particular in the form of a polygon. This bounding box is preferably determined based on the target cluster, such that a bounding box is respectively generated to each target cluster. For providing the bounding box, for example, all of the exterior corners of the target cluster can be connected to each other. Such a bounding box can then be presented on a display in the motor vehicle together with the image, such that the driver can quickly recognize and perceive the target object. However, alternatively, the bounding box can also be used by other image processing algorithms.

In addition, the invention relates to a camera device, in particular for a motor vehicle, including a camera for providing an image of an environmental region, and including an electronic evaluation device for processing the image. The evaluation device is formed for performing a method according to the invention.

A motor vehicle according to the invention, in particular a passenger car, includes a camera device according to the invention.

The preferred embodiments presented with respect to the method according to the invention and the advantages thereof correspondingly apply to the camera device according to the invention as well as to the motor vehicle according to the invention.

Further features of the invention are apparent from the claims, the figures and the description of figures.

Now, the invention is explained in more detail based on a preferred embodiment as well as with reference to the attached drawings.

There show:
- Fig. 1: in schematic illustration a side view of a motor vehicle according to an embodiment of the invention;
- Fig. 2 to 12: each an image or an image region, wherein a method according to an embodiment of the invention is explained in more detail.

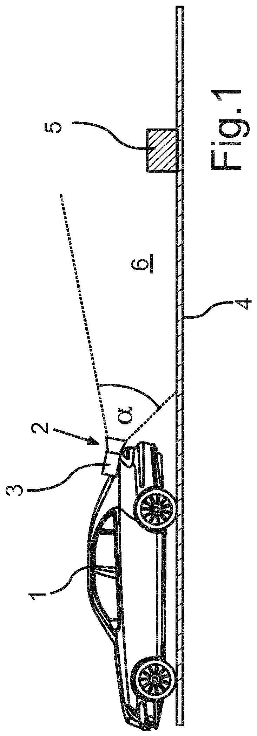

In Fig. 1, in schematic illustration, a side view of a motor vehicle 1 according to an embodiment of the invention is illustrated. The motor vehicle 1 is for example a passenger car. It has a camera device 2 including a camera 3, in particular a mono camera. The motor vehicle 1 is located on a road 4, which at the same time also represents a ground (soil). In addition, a target object 5, i.e. an obstacle with a certain height above the ground 4, is located on the ground 4.

For example, the camera device 2 is a collision warning system and serves for warning the driver of the motor vehicle 1 of the target object 5 located in an environmental region 6 of the motor vehicle 1. The camera device 2 in particular serves for detection of the target object 5 as well as for tracking the target object 5. Images are provided by means of the camera 3, which are subsequently processed by means of a not illustrated electronic evaluation device (digital signal processor). The evaluation device receives the captured images and additionally also information about respectively current steering angles of the motor vehicle 1 and the respectively current velocity and about the respectively current direction of movement of the motor vehicle 1 and determines a movement vector of the motor vehicle 1 depending on the received information. The mentioned information can be picked up e.g. on the CAN bus. The movement vector of the motor vehicle 1 specifies the current velocity as well as the current direction of movement of the motor vehicle 1.

The camera 3 has a capturing angle or opening angle α, which can e.g. be in a range of values from 90° to 200°. The camera 3 can be a CMOS camera or else a CCD camera or another image capturing device formed for detecting light in the visible spectral range.

In the embodiment according to Fig. 1, the camera 3 is disposed in a rear region of the motor vehicle 1 and captures an environmental region 6 behind the motor vehicle 1. However, the invention is not restricted to such an arrangement of the camera 3. The arrangement of the camera 3 can be different according to embodiment. For example, the camera 3 or another camera can also be disposed in a front region of the motor vehicle 1 and capture the environmental region in front of the motor vehicle 1. Multiple such cameras 3 can also be employed, which are each formed for detecting a target object. The invention either is not restricted to the installation of the camera device 2 in the motor vehicle 1. Applications outside of a motor vehicle are also possible.

The camera 3 is a video camera continuously providing a sequence of frames. The electronic evaluation device then processes the image sequence in real time and can detect and track the target object 5 based on this image sequence. This can be configured such that the current images of the camera 3 are presented on a display in the motor vehicle 1 and the detected target object 5 is provided with a bounding box.

The mentioned evaluation device can for example also be integrated in the camera 3. Alternatively, it can be a separate component.

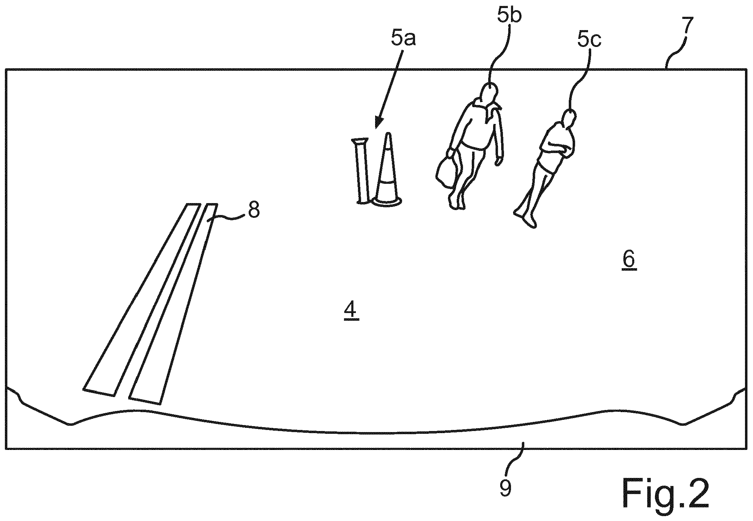

A method according to an embodiment of the invention is now explained in more detail with reference to Fig. 2 to 12. Fig. 2 shows an exemplary image 7 as it is provided by means of the camera 3. In the image 7, the environmental region 6 of the motor vehicle 1 is depicted. As is apparent from Fig. 2, target objects 5a, 5b, 5c are located in the environmental region 6, which represent actual obstacles with a certain height. In addition, road markings 8 are applied to the ground 4, which do not have any height. The road markings 8 are therefore no obstacles. In the image 7, furthermore, a region of a bumper 9 of the motor vehicle 1 is depicted.

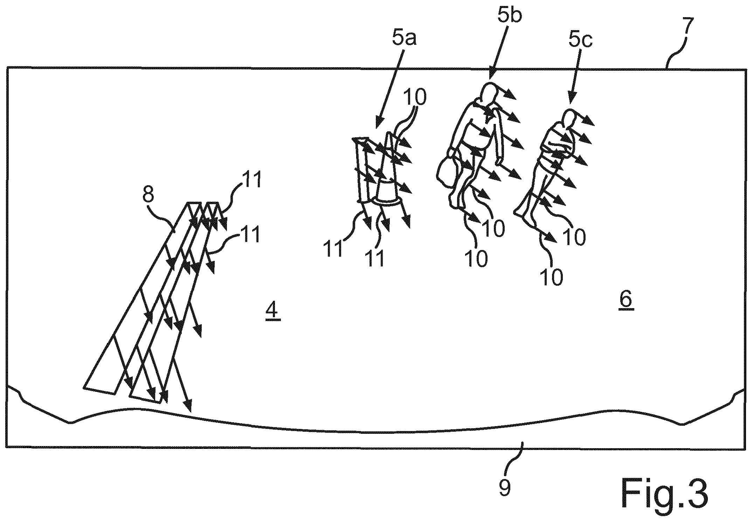

Now, characteristic features are extracted from the image 7, for example the Harris points. Then, optical flow vectors are calculated to the characteristic features based on two consecutive images 7 of the camera 3. The optical flow method is used. Therein, exemplary flow vectors are schematically illustrated in Fig. 3. It is differentiated between target vectors 10 associated with the target objects 5, and ground vectors 11 associated with the ground 4 itself. For this classification, the above mentioned movement vector of the motor vehicle 1 can also be used. Considering the current movement vector of the motor vehicle 1, the target vectors 10 can be differentiated from the ground vectors 11.

As is apparent from Fig. 3, ground vectors 11 are also detected at the target object 5a, namely in the transition region between the target object 5a and the ground 4 - for instance at the feet of the pedestrian. Namely, the lower portion of the target object 5a is located relatively close to the ground 4 such that these vectors are classified as ground vectors 11.

Now, the characteristic features can also be divided in two groups: the features of the target vectors 10 are classified as target features, while the features of the ground vectors 11 are classified as ground features.

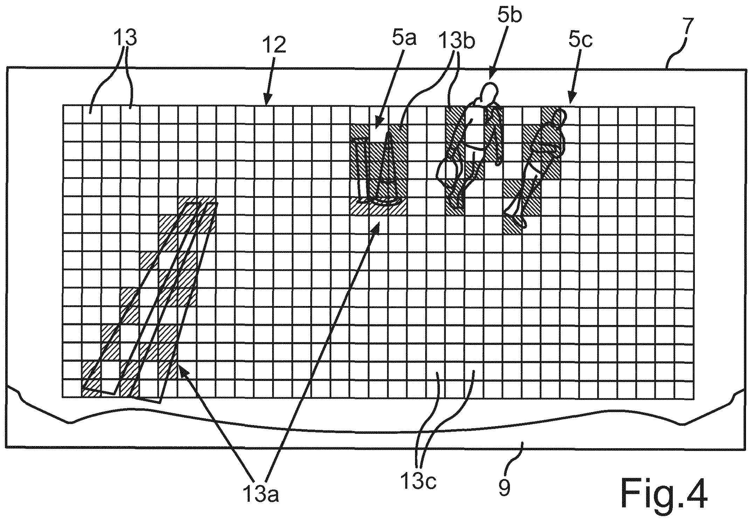

With reference to Fig. 4, a partial region 12 is defined in the image 7, which is smaller than the image 7. The partial region 12 has the advantage that the computing time is reduced on the one hand and an erroneous detection of the bumper 9 is prevented on the other hand. Namely, exclusively the partial region 12 is further evaluated and processed.

The partial region 12 is divided in a plurality of equal, square image cells 13. The image cells 13 can for example have the size of 4 x 4 pixels.

Then, it is examined to each image cell 13 whether this image cell 13 includes a ground feature or a target feature. If an image cell 13 includes a ground feature, thus, this image cell 13 is classified as a ground cell 13a. In contrast, if an image cell 13 includes a target feature, thus, this image cell 13 is classified as a target cell 13b. If an image cell 13 includes both a target feature and a ground feature, this image cell 13 can be classified as a target cell 13b. However, such a situation is rather unlikely.

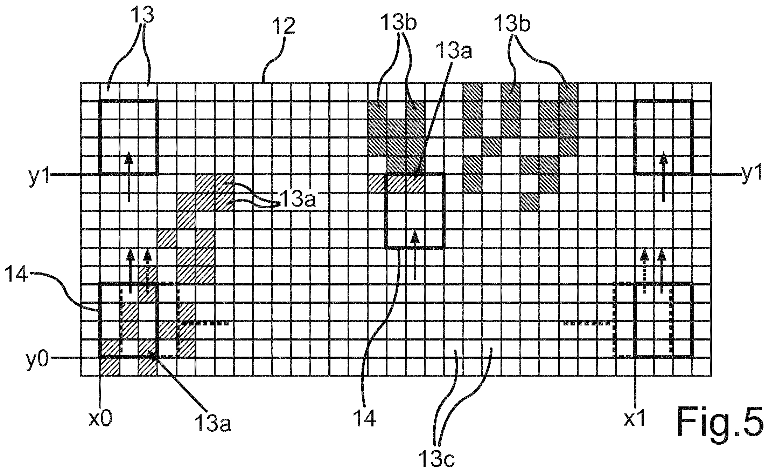

If the image cells 13 are classified as ground cells 13a, as target cells 13b as well as neutral cells 13c (neither ground cell nor target cell), thus, regions of interest (ROIs) can be defined:
With reference to Fig. 5, a scan window 14 is defined in the partial region 12, which has the size of several image cells 13. Generally, the scan window 14 can have dimensions of B x H, wherein B denotes the width (in x direction) and H denotes the height (in y direction). For example, it applies: B=3 and H=4. Then, the partial region 12 is scanned by means of the scan window 14, wherein the scanning is effected column by column from the bottom to the top. The step size can for example be 1 image cell 13. The start position of the scan window 14 is denoted by y0, x0 in Fig. 5. Thus, the scanning is effected starting from the lower left corner of the partial region 12. Then, the scan window 14 is moved upwards by one image cell 13 into a second position, etc. The last position within the first column is identified by y1 in Fig. 5. After this column, the scan window 14 is moved to the right by one image cell 13, and the second column is scanned. Thus, after the scanning operation of the first column, the scan window 14 is shifted to the right by one image cell 13 in order to initialize the scanning of a further column. Therein, different, exemplary positions of the scan window 14 are illustrated in Fig. 5, wherein the last position is identified by x1, y1.

For each position of the scan window 14, it is checked whether or not all of the image cells 13 within the scan window 14 can be combined to a ROI. Therein, a preset, negative first weighting factor w_ < 0 is associated with all of the ground cells 13a. In contrast, a positive second weighting factor w₊ > 0 is associated with the target cells 13b. The neutral image cells 13c are provided with a neutral weighting factor, for example 0. In each position of the scan window 14, an overall weighting is calculated.

In other words, in each position of the scan window 14, the sum of the weighting factors within the scan window 14 is determined. In still other words, for each position of the scan window 14, the respective number of the ground cells 13a as well as the respective number of the target cells 13b within the scan window 14 are determined, and the number of the target cells 13b is multiplied by the positive weighting factor w₊, while the number of the ground cells 13a is multiplied by the negative weighting factor w₋. The sum of these multiplication results then results in the overall weighting W_{N,M}.

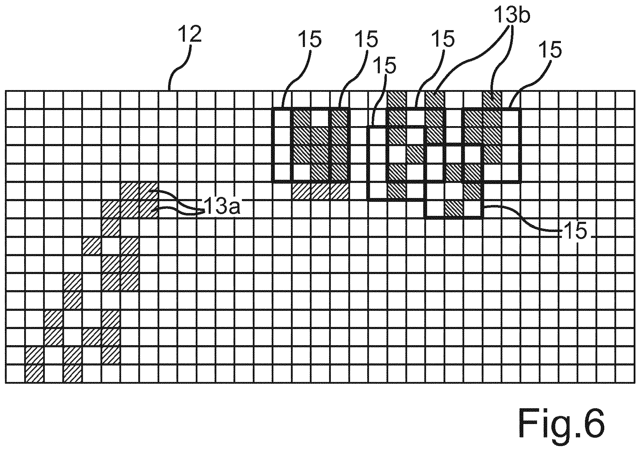

If the overall weighting W_{N,M} exceeds a preset limit value, thus, all of the image cells 13 within the scan window 14 are combined to a ROI in the respective position of the window 14. As illustrated in Fig. 6, several such ROIs 15 are detected in the partial region 12. In a further step, the ROIs 15 are combined to target clusters.

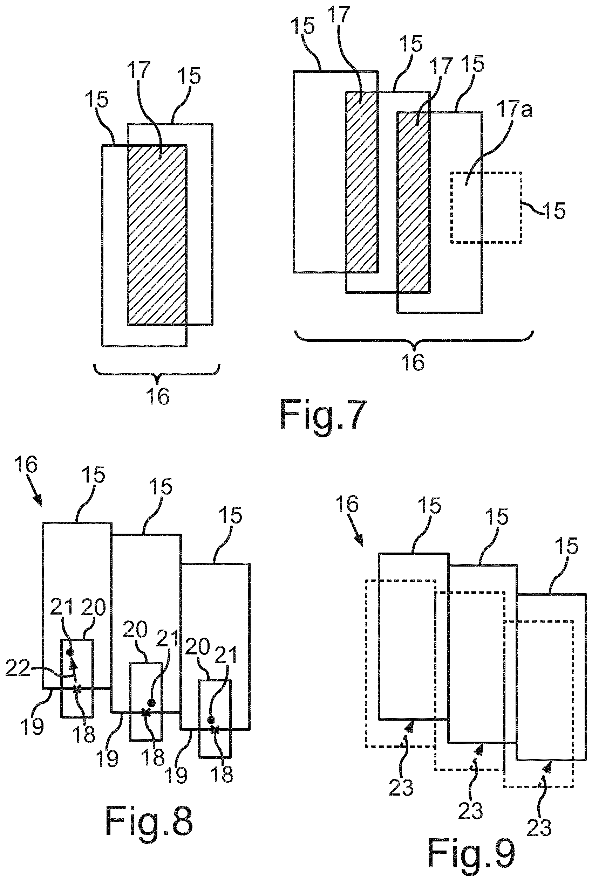

The combination of the ROIs 15 to target clusters is illustrated in Fig. 7. Two adjacent ROIs 15 are combined to a common target cluster 16 if an overlap area 17 between the ROIs 15 is greater than a preset limit value. Thus, the number of the image cells 13 is determined, which are both in the one ROI 15 and in the other ROI 15, and the two ROIs 15 are combined to a target cluster 16 if the number of the common image cells 13 is greater than the limit value. In Fig. 7, it is illustrated how two separate target clusters 16 are formed from two ROIs 15 on the one hand (in Fig. 7 on the left) as well as from three ROIs 15 on the other hand (in Fig. 7 on the right). In addition, it is illustrated in Fig. 7 that the size of an overlap area 17a between two adjacent ROIs 15 is less than the limit value. The dashed ROI 15 therefore is not associated with the right target cluster 16.

If target clusters 16 are present, thus, the following correction is additionally performed to each target cluster 16: with reference to Fig. 8, the respective central points 18 of the lower base edges 19 are determined at all ROIs 15 of the target cluster 16. A search area 20 of preset size is defined around this central point 18. The search area 20 for example has the shape of a rectangle, the width of which is lower than the width of the associated ROI 15. In the respective search area 20, then, a characteristic feature 21 is searched for, which has the greatest intensity with respect to other features within the search area 20. These features can for example be Harris points. Within each search area 20, then, a deviation vector 22 between the respective central point 18 and the most intense feature 21 is determined. Then, a median (median vector) 23 is determined from all of the deviation vectors 22 of the target cluster 16, which is schematically illustrated in Fig. 9. The position of the target cluster 16 in the partial region 12 is then corrected by the median vector 23. In Fig. 9, the original position of the target cluster 16 is illustrated with a dashed line, while the new corrected position is shown with a solid line.

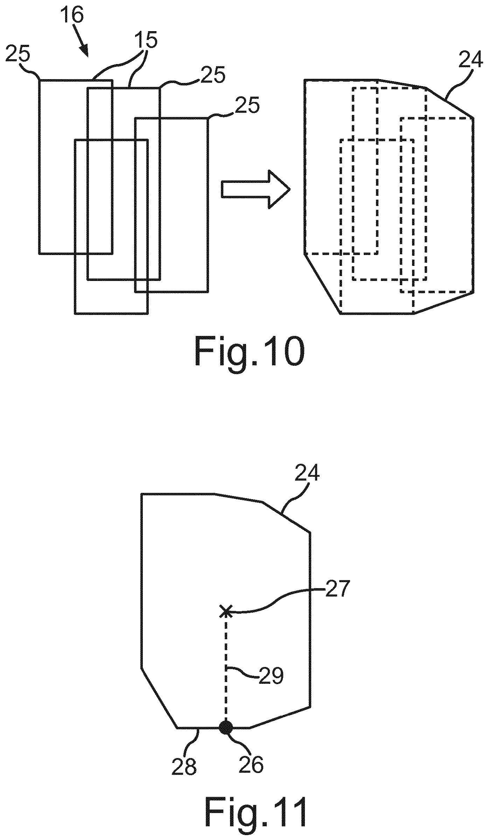

Then, a bounding box can be provided to each target cluster 16, which can be optionally superimposed in the image 7 on the display in order to optically highlight the respective target object 5. With reference to Fig. 10, a bounding box 24 to a target cluster 16 is formed by respectively connecting all of the corners 25 of the target cluster 16 to each other in pairs with a straight line. Thus, a polygon arises as the bounding box 24 as it is depicted in Fig. 10 with a solid line.

With reference to Fig. 11, optionally, a base point 26 of the bounding box 24 and thus of the target object 5 can additionally be determined. The determination of the base point 26 has the advantage that additional information with respect to the tracking of the target object 5 can be extracted and the exact position of the base point 26 of the target object 5 in the three-dimensional space can also be determined. In order to determine the base point 26, first, a geometric center of gravity 27 of the bounding box 24 is determined. The center of gravity 27 is then projected vertically downwards, namely to a base edge 28 of the bounding box 24. The projection of the center of gravity 27 to the base edge 28 represents the base point 26. In other words, the base point 26 is defined as the intersection between a projection line 29 and the base edge 28.

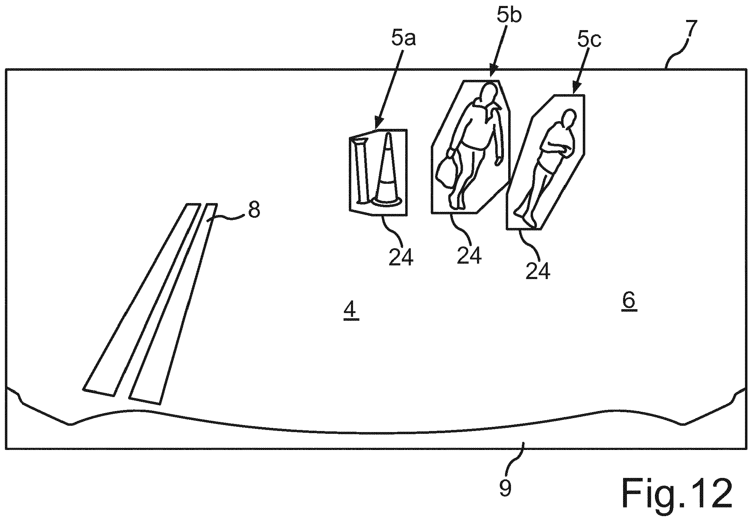

Finally, an image 7 can be provided, in which the target objects 5a, 5b, 5c are each provided with a bounding box 24. Such an image 7 is illustrated in Fig. 12.

## Claims

1. Method for detecting a target object (5) in an environmental region (6) of a camera (3) of a motor vehicle (1), based on two images (7) of the environmental region (6) provided by means of the camera (3), including the steps of:
- receiving information about respectively current steering angles of the motor vehicle (1) and the respectively current velocity and about the respectively current direction of movement and determining a movement vector of the motor vehicle (1) depending on the received information,
- determining a plurality of characteristic features in an image of the two images (7) and calculating the corresponding optical flow vectors to each extracted characteristic features, and by correlating said optical flow vectors with the current movement vector of the motor vehicle (1) such that correction is effected based on the current movement of the motor vehicle (1), allowing to differentiate between ground features associated with a ground (4) of the environmental region (6) and target features associated with a target object (5),
- dividing at least a partial region (12) of the image (7) in a plurality of image cells (13) and examining to each image cell (13) whether the image cell (13) includes a ground feature or a target feature,
- classifying those image cells (13), which include a target feature, as target cells (13b), and those image cells (13), which include a ground feature, as ground cells (13a), and
- detecting the target object (5) by combining a plurality of adjacent image cells (13) to a target cluster (16) depending on the target cells (13b) and the ground cells (13a);
wherein the determination of the target cluster (16) includes that a scan window (14) is defined in the partial region (12) of the image (7) and the number of the target cells (13b) and the number of the ground cells (13a) within the scan window (14) are determined for a plurality of different positions of the scan window (14) within the partial region (12), wherein the image cells (13) within the scan window (14) in the respective position of the scan window (14) are combined to a region of interest (ROI 15) if a predetermined criterion with respect to the number of the target cells (13b) and the number of the ground cells (13a) within the scan window (14) is satisfied, and wherein the target cluster (16) is determined based on the regions of interest (ROI 15).

2. Method according to claim 1,
**characterized in that**
the number of the ground cells (13a) is multiplied by a negative first weighting factor (w₋) and the number of the target cells (13b) is multiplied by a positive second weighting factor (w₊) and the predetermined criterion includes that the sum of the multiplication results is greater than a preset limit value.

3. Method according to claim 1 or 2,
**characterized in that**
the position of the scan window (14) in the partial region (12) is altered column by column.

4. Method according to claim 3,
**characterized in that**
the position of the scan window (14) in the partial region (12) is altered column by column respectively from the bottom towards the top.

5. Method according to claim 3 or 4,
**characterized in that**
if the predetermined criterion is satisfied in a position of the scan window (14) within a column, further alteration of the position of the scan window (14) within the same column is omitted and the scan window (14) is defined in a further column.

6. Method according to any one of the preceding claims,
**characterized in that**
at least two adjacent regions of interest (ROI 15) are combined to a common target cluster (16) if an overlap area (17) of these regions (ROI 15) is greater than a preset limit value.

7. Method according to any one of the preceding claims,
**characterized in that**
a central point (18) of a lower base edge (19) is respectively determined to each region of interest (ROI 15) of a target cluster (16) and a search area (20) is defined around this central point (18), wherein a characteristic feature (21) of greatest intensity is determined within the respective search area (20) and a deviation vector (22) is determined between the respective central point (18) and the associated feature (21), and wherein the position of the target cluster (16) in the image (7) is corrected depending on the deviation vectors (22).

8. Method according to claim 7,
**characterized in that**
the correction includes that a median (23) of all of the deviation vectors (22) of the target cluster (16) is determined, and the target cluster (16) is shifted by the median (23).

9. Method according to any one of the preceding claims,
**characterized in that**
the detection of the target object (5) includes that a bounding box (24), in particular in the form of a polygon, is provided to the target object (5) in the image (7) based on the target cluster (16).

10. Camera device (2), for a motor vehicle (1), including a camera (3) for providing two images (7) of an environmental region (6), and including an electronic evaluation device for processing the images (7), wherein the evaluation device is adapted to perform a method according to any one of the preceding claims.

11. Motor vehicle (1) with a camera device (2) according to claim 10.

## Patentansprüche

1. Verfahren zum Detektieren eines Zielobjekts (5) in einer Umgebungsregion (6) einer Kamera (3) eines Kraftfahrzeugs (1), basierend auf zwei Bildern (7) der Umgebungsregion (6), die durch Mittel der Kamera (3) bereitgestellt werden, umfassend die folgenden Schritte:
- Empfangen von Informationen über jeweilige aktuelle Lenkwinkel des Kraftfahrzeugs (1) und die jeweilige aktuelle Geschwindigkeit und über die jeweilige aktuelle Bewegungsrichtung und Bestimmen eines Bewegungsvektors des Kraftfahrzeugs (1) in Abhängigkeit von den empfangenen Informationen,
- Bestimmen mehrerer charakteristischer Merkmale in einem Bild der zwei Bilder (7) und Berechnen des entsprechenden Optischer-Fluss-Vektors zu jedem extrahierten charakteristischen Merkmal und durch Korrelieren des Optischer-Fluss-Vektors mit dem aktuellen Bewegungsvektor des Kraftfahrzeugs (1), sodass eine Korrektur basierend auf der aktuellen Bewegung des Kraftfahrzeugs (1) bewirkt wird, wodurch ein Differenzieren zwischen Bodenmerkmalen, die mit einem Boden (4) der Umgebungsregion (6) assoziiert sind, und Zielmerkmalen, die mit einem Zielobjekt (5) assoziiert sind, ermöglicht wird,
- Unterteilen zumindest einer Teilregion (12) des Bilds (7) in mehrere Bildzellen (13) und Untersuchen jeder Bildzelle (13) dahingehend, ob die Bildzelle (13) ein Bodenmerkmal oder ein Zielmerkmal enthält,
- Klassifizieren derjenigen Bildzellen (13), die ein Zielmerkmal enthalten, als Zielzellen (13b) und derjenigen Bildzellen (13), die ein Bodenmerkmal enthalten, als Bodenzellen (13a) und
- Detektieren des Zielobjekts (5) durch Kombinieren mehrerer benachbarter Zellen (13) mit einem Zielcluster (16) in Abhängigkeit von den Zielzellen (13b) und den Bodenzellen (13a);
wobei die Bestimmung des Zielclusters (16) beinhaltet, dass ein Scanfenster (14) in der Teilregion (12) des Bilds (7) definiert wird und die Anzahl der Zielzellen (13b) und die Anzahl der Bodenzellen (13a) in dem Scanfenster (14) für mehrere verschiedene Positionen des Scanfensters (14) in der Teilregion (12) bestimmt werden, wobei die Bildzelle (13) in dem Scanfenster (14) an der jeweiligen Position des Scanfensters (14) zu einer Interessensregion (ROI 15) kombiniert werden, wenn ein vorbestimmtes Kriterium hinsichtlich der Anzahl von Zielzellen (13b) und der Anzahl von Bodenzellen (13a) in dem Scanfenster (14) erfüllt wird, und wobei das Zielcluster (16) basierend auf der Interessensregion (ROI 15) bestimmt wird.

2. Verfahren nach Anspruch 1,
**dadurch gekennzeichnet, dass**
die Anzahl der Bodenzellen (13a) mit einem negativen ersten Gewichtungsfaktor (W₋) multipliziert wird und die Anzahl der Zielzellen (13b) mit einem positiven zweiten Gewichtungsfaktor (W+) multipliziert wird und das vorbestimmte Kriterium beinhaltet, dass die Summe der Multiplikationsergebnisse größer als ein vorgegebener Grenzwert ist.

3. Verfahren nach Anspruch 1 oder 2,
**dadurch gekennzeichnet, dass**
die Position des Scanfensters (14) in der Teilregion (12) Spalte für Spalte geändert wird.

4. Verfahren nach Anspruch 3,
**dadurch gekennzeichnet, dass**
die Position des Scanfensters (14) in der Teilregion (12) jeweils von unten nach oben Spalte für Spalte geändert wird.

5. Verfahren nach Anspruch 1 oder 2,
**dadurch gekennzeichnet, dass**,
wenn das vorbestimmte Kriterium an einer Position des Scanfensters (14) in einer Spalte erfüllt ist, auf eine weitere Änderung der Position des Scanfensters (14) in derselben Spalte verzichtet wird und das Scanfenster (14) in einer weiteren Spalte definiert wird.

6. Verfahren nach einem der vorhergehenden Ansprüche,
**dadurch gekennzeichnet, dass**
mindestens zwei benachbarte Interessensregionen (ROI 15) zu einem gemeinsamen Zielcluster (16) kombiniert werden, wenn ein Überlappungsbereich (17) dieser Regionen (ROI 15) größer als ein vorgegebener Grenzwert ist.

7. Verfahren nach einem der vorhergehenden Ansprüche,
**dadurch gekennzeichnet, dass**
ein Mittelpunkt (18) einer unteren Basiskante (19) jeweils zu jeder Interessensregion (ROI 15) eines Zielclusters (16) bestimmt wird und ein Suchbereich (20) um diesen Mittelpunkt (18) herum definiert wird, wobei ein charakteristisches Merkmal (21) einer größten Intensität in dem jeweiligen Suchbereich (20) bestimmt wird und ein Abweichungsvektor (22) zwischen dem jeweiligen Mittelpunkt (18) und dem assoziierten Merkmal (21) bestimmt wird, und wobei die Position des Zielclusters (16) in dem Bild (7) in Abhängigkeit von den Abweichungsvektoren (22) korrigiert wird.

8. Verfahren nach Anspruch 7,
**dadurch gekennzeichnet, dass**
die Korrektur beinhaltet, dass ein Median (23) sämtlicher Abweichungsvektoren (22) des Zielclusters (16) bestimmt wird und das Zielcluster (16) um den Median (23) verschoben wird.

9. Verfahren nach einem der vorhergehenden Ansprüche,
**dadurch gekennzeichnet, dass**
die Detektion des Zielobjekts (5) beinhaltet, dass das Zielobjekt (5) in dem Bild (7) basierend auf dem Zielcluster (16) mit einem Hüllquader (24), insbesondere in Form eines Polygons, versehen wird.

10. Kameravorrichtung (2) für ein Kraftfahrzeug (1), umfassend eine Kamera (3) zum Bereitstellen von zwei Bildern (7) einer Umgebungsregion (6) und umfassend eine elektronische Auswertungsvorrichtung zum Verarbeiten der Bilder (7), wobei die Auswertungsvorrichtung dazu ausgelegt ist, ein Verfahren nach einem der der vorhergehenden Ansprüche durchzuführen.

11. Kraftfahrzeug (1) mit einer Kameravorrichtung (2) nach Anspruch 10.

## Revendications

1. Procédé de détection d'un objet cible (5) dans une région environnementale (6) d'une caméra (3) d'un véhicule à moteur (1), sur la base de deux images (7) de la région environnementale (6) fournies au moyen de la caméra (3), comprenant les étapes suivantes :
- recevoir des informations sur les angles de braquage respectivement courants du véhicule à moteur (1) et la vitesse respectivement courante, et sur la direction de mouvement respectivement courante, et déterminer un vecteur de mouvement du véhicule à moteur (1) en fonction des informations reçues,
- déterminer une pluralité d'éléments caractéristiques dans une image des deux images (7) et calculer les vecteurs de flux optique correspondants à chaque élément caractéristique extrait et en corrélant lesdits vecteurs de flux optique avec le vecteur de mouvement courant du véhicule à moteur (1) de sorte que la correction soit effectuée sur la base du mouvement courant du véhicule à moteur (1),
- permettre de différencier les éléments de sol associés à un sol (4) de la région environnementale (6) et les éléments cibles associés à un objet cible (5),
- diviser au moins une région partielle (12) de l'image (7) en une pluralité de cellules d'image (13) et examiner pour chaque cellule d'image (13) si la cellule d'image (13) comprend un élément de sol ou un élément cible,
- classer les cellules d'image (13), qui comprennent un élément cible, en tant que cellules cibles (13b), et les cellules d'image (13), qui comprennent un élément de sol, comme cellules de sol (13a), et
- détecter l'objet cible (5) en combinant une pluralité de cellules d'image adjacentes (13) en un groupe cible (16) en fonction des cellules cibles (13b) et des cellules de sol (13a) ;
où la détermination du groupe cible (16) comprend le fait qu'une fenêtre de balayage (14) est définie dans la région partielle (12) de l'image (7) et le nombre de cellules cibles (13b) et le nombre de cellules de sol (13a) à l'intérieur de la fenêtre de balayage (14) sont déterminés pour une pluralité de positions différentes de la fenêtre de balayage (14) à l'intérieur de la région partielle (12), où les cellules d'image (13) à l'intérieur de la fenêtre de balayage (14) dans la position respective de la fenêtre de balayage (14) sont combinées à une région d'intérêt (ROI 15) si un critère prédéterminé concernant le nombre de cellules cibles (13b) et le nombre de cellules de sol (13a) à l'intérieur de la fenêtre de balayage (14) est satisfait, et où le groupe cible (16) est déterminé sur la base des régions d'intérêt (ROI 15).

2. Procédé selon la revendication 1,
**caractérisé en ce que** :
le nombre de cellules de sol (13a) est multiplié par un premier facteur de pondération négatif (w-) et le nombre de cellules cibles (13b) est multiplié par un second facteur de pondération positif (w+) et le critère prédéterminé inclut que la somme des résultats de la multiplication est supérieure à une valeur limite prédéfinie.

3. Procédé selon la revendication 1 ou la revendication 2,
**caractérisé en ce que** :
la position de la fenêtre de balayage (14) dans la région partielle (12) est modifiée colonne par colonne.

4. Procédé selon la revendication 3,
**caractérisé en ce que** :
la position de la fenêtre de balayage (14) dans la zone partielle (12) est modifiée colonne par colonne, respectivement du bas vers le haut.

5. Procédé selon la revendication 3 ou la revendication 4,
**caractérisé en ce que** :
si le critère prédéterminé est satisfait dans une position de la fenêtre de balayage (14) à l'intérieur d'une colonne, une autre modification de la position de la fenêtre de balayage (14) à l'intérieur de la même colonne est omise, et la fenêtre de balayage (14) est définie dans une autre colonne.

6. Procédé selon l'une quelconque des revendications précédentes,
**caractérisé en ce que** :
au moins deux régions d'intérêt (ROI 15) adjacentes sont combinées à un groupe cible commun (16) si une zone de chevauchement (17) de ces régions (ROI 15) est supérieure à une valeur limite prédéfinie.

7. Procédé selon l'une quelconque des revendications précédentes,
**caractérisé en ce que** :
un point central (18) d'un bord de base inférieur (19) est respectivement déterminé pour chaque région d'intérêt (ROI 15) d'un groupe cible (16) et une zone de recherche (20) est définie autour de ce point central (18), où un élément caractéristique (21) de plus grande intensité est déterminé à l'intérieur de la zone de recherche respective (20) et un vecteur de déviation (22) est déterminé entre le point central respectif (18) et l'élément associé (21), et où la position du groupe cible (16) dans l'image (7) est corrigée en fonction des vecteurs de déviation (22).

8. Procédé selon la revendication 7,
**caractérisé en ce que** :
la correction comprend la détermination d'une médiane (23) de tous les vecteurs de déviation (22) du groupe cible (16), et le décalage du groupe cible (16) par la médiane (23).

9. Procédé selon l'une quelconque des revendications précédentes,
**caractérisé en ce que** :
la détection de l'objet cible (5) comprend qu'une boîte de délimitation (24), en particulier sous la forme d'un polygone, est fournie à l'objet cible (5) dans l'image (7) sur la base du groupe cible (16).

10. Dispositif de caméra (2) pour un véhicule à moteur (1), comprenant une caméra (3) pour fournir deux images (7) d'une région environnementale (6), et comprenant un dispositif d'évaluation électronique pour traiter les images (7), où le dispositif d'évaluation est adapté pour exécuter un procédé selon l'une quelconque des revendications précédentes.

11. Véhicule à moteur (1) muni d'un dispositif de caméra (2) selon la revendication 10.
